# EUROPÄISCHE PATENTSCHRIFT

(11) **EP 1 577 198 B1**
(45) Veröffentlichungstag und Bekanntmachung des Hinweises auf die Patenterteilung: **16.01.2008**
(21) Anmeldenummer: 05004603.6
(22) Anmeldetag: 03.03.2005
(51) Int. Cl.: B62D 55/28

(54) **Gleiskette für ein Kettenfahrzeug und Laufwerksplatte dafür**
Track for an endless track vehicle, with ground engaging plate
Section de chenille pour véhicule chenillé avec semelle

(30) Priorität: 18.03.2004 DE 102004013705
(43) Veröffentlichungstag der Anmeldung: 21.09.2005
(73) Patentinhaber: Lutz, Hildebrandt, 27612 Loxstedt (DE)
(72) Erfinder: Lutz, Hildebrandt, 27612 Loxstedt (DE)
(74) Vertreter: Philipp, Matthias

(56) Entgegenhaltungen:
- GB-A- 969 732
- US-A- 1 485 026
- US-A- 1 487 416
- US-A- 4 602 825

## Beschreibung

Die Erfindung betrifft eine Gleiskette für ein Kettenfahrzeug nach dem Oberbegriff des Anspruchs 1 sowie eine Laufwerksplatte für eine derartige Gleiskette nach dem Oberbegriff des Anspruchs 11.

Herkömmlicherweise sind Boden- oder Laufwerksplatten an einer Gleiskette eines Kettenfahrzeugs mittels mehrerer, jeweils eine Kettenlasche durchgreifender Befestigungsbolzen verschraubt. Üblich sind insgesamt vier Befestigungsbolzen je Laufwerksplatte, wobei jeweils zwei Befestigungsbolzen je Kettenlasche vorgesehen sind. Abgesehen von einem nicht unerheblichen Montageaufwand besteht dahingehend ein Problem, daß jede Laufwerksplatte gerade an dem oder in unmittelbarer Nähe des Querschnitts, an dem sie einem maximalen Biegemoment ausgesetzt ist, durch die für die Befestigungsbolzen erforderlichen Durchgangsbohrungen geschwächt ist.

Aus der US 1 487 416 ist eine Gleiskette bekannt, die aus einteiligen, im Querschnitt U-förmigen Kettengliedern gebildet ist, deren jeweilige Schenkel die Kettenlaschen bilden und an deren Verbindungssteg jeweils eine Laufwerksplatte mit einer zentralen Befestigungsschraube zu befestigen ist. Eine derartige einteilige Ausbildung des Kettenglieds ist relativ kostenaufwendig.

US 1 485 026 zeigt eine ähnliche Anordnung mit vernieteten Elementen.

GB 969 732 offenbart ein einstückig hergestelltes Kettengliedelement.

Die Aufgabe der Erfindung besteht darin, eine verbesserte Gleiskette für ein Kettenfahrzeug anzugeben, sowie eine verbesserte Laufwerksplatte, bei der das vorstehend beschriebene Problem der Schwächung eines stark belasteten Querschnitts nicht mehr besteht oder zumindest deutlich abgemildert ist, und die kostengünstig herzustellen ist.

Diese Aufgabe wird erfindungsgemäß zunächst durch eine Gleiskette für ein Kettenfahrzeug gelöst, die sich dadurch auszeichnet, daß mindestens ein Kettenglied der Gleiskette ein zentrales Befestigungsmittel zur lösbaren Befestigung einer Laufwerksplatte aufweist, das sich innerhalb eines zentralen, benachbart zu einer Längsmittelebene der Gleiskette angeordneten Befestigungsbereichs befindet.

Der zentrale Befestigungsbereich kann eine Breite von bis zu 75% oder bis zu 50% oder bis zu 25% einer Breite des Kettenglieds aufweisen.

Das zentrale Befestigungsmittel kann durch einen oder zwei sich quer zur Längsmittelebene erstreckenden Befestigungsansatz (-ansätze) einer oder beider Kettenlaschen des Kettenglieds gebildet sein.

Es kann vorgesehen sein, daß das zentrale Befestigungsmittel durch einen sich zwischen zwei Kettenlaschenbereichen des Kettenglieds erstreckenden und einstückig damit ausgebildeten Verbindungsbereich gebildet ist. Das zentrale Befestigungsmittel kann mindestens eine zentrale Befestigungsöffnung mit Innengewinde zur Aufnahme mindestens eines Befestigungsbolzens umfassen.

Wenn das zentrale Befestigungsmittel in vorgenannter Weise durch einen Befestigungsansatz oder einen Verbindungsbereich gebildet ist, kann vorgesehen sein, daß das zentrale Befestigungsmittel bezüglich einer im Betrieb der Gleiskette außenseitig liegenden Anlagefläche des Kettenglieds entlang der Längsmittelebene nach innen abgestuft versetzt ist, wobei seitliche Übergangsschultern zwischen dem zentralen Befestigungsmittel und der Anlagefläche eine Zentrierungsanlage für eine komplementär dazu ausgebildete Zentrierungsausformung einer Laufwerksplatte bilden.

Die Adapterplatte kann beiderseits der Längsmittelebene jeweils mindestens eine seitliche Befestigungsöffnung zur Befestigung an den Kettenlaschen aufweisen. Insbesondere kann vorgesehen sein, daß die Adapterplatte mindestens eine innerhalb des zentralen Befestigungsbereichs befindliche zentrale Befestigungsöffnung zur Befestigung der Laufwerksplatte aufweist.

Bevorzugt ist vorgesehen, daß die mindestens eine zentrale Befestigungsöffnung der Adapterplatte (jeweils) durch eine mit Innengewinde versehene und mit der Adapterplatte unlösbar verbundene Verstärkungshülse gebildet ist.

Die Adapterplatte kann eine Breite aufweisen, die im wesentlichen der Breite des Kettenglieds entspricht. Es kann vorgesehen sein, daß die Adapterplatte eine Breite aufweist, die bis zur doppelten Breite des Kettenglieds beträgt.

Bevorzugt ist vorgesehen, daß die Adapterplatte quer zur Längsmittelebene im wesentlichen starr ist.

Die Aufgabe der Erfindung wird ferner gelöst durch eine Laufwerksplatte für eine erfindungsgemäße Gleiskette nach Anspruch 11.

Das zentrale Befestigungsmittel kann mindestens eine Befestigungsöffnung aufweisen, die symmetrisch zu der Längsmittelebene ausgebildet sein kann. Bevorzugt ist eine (einzige) mittige Befestigungsöffnung vorgesehen.

Es kann vorgesehen sein, daß die Laufwerksplatte quer zur Längsmittelebene elastisch ist.

Zweckmäßigerweise ist die mindestens eine Befestigungsöffnung als Befestigungsbohrung mit abgestuften Durchmessern ausgebildet.

Soweit die Laufwerksplatte an einer Gleiskette bzw. einem Kettenglied anzubringen ist, bei dem das zentrale Befestigungsmittel durch einen Befestigungsansatz einer Kettenlasche oder einen einstückig mit der Kettenlasche ausgebildeten Verbindungsbereich gebildet ist, und das zentrale Befestigungsmittel abgestuft versetzt angeordnet ist, kann vorgesehen sein, daß an einer im montierten Zustand der Anlagefläche des Kettenglieds zugewandten Oberseite der Laufwerksplatte eine zu den Übergangsschultern komplementäre Zentrierungsausformung ausgebildet ist, die mit den Übergangsschultern zentrierend zusammenwirkt.

Weitere Vorteile und Merkmale der Erfindung ergeben sich aus der nachfolgenden Beschreibung eines Ausführungsbeispiels, wobei auf eine Zeichnung Bezug genommen ist, in der
Fig. 1 eine schematische Seitenansicht, teilweise im Schnitt, einer erfindungsgemäßen Gleiskette zeigt,
Fig. 2 eine schematische, teilweise weggeschnittene Draufsicht auf die Gleiskette nach Fig. 1 zeigt,
Fig. 3 eine auseinandergezogene Darstellung der erfindungsgemäßen Laufwerksplattenanordnung, teilweise im Schnitt, in Richtung III in Fig. 2 zeigt,
Fig. 4 bis 6 verschiedene Ansichten einer erfindungsgemäßen Laufwerksplatte zeigen,
Fig. 7 eine Schnittansicht einer herkömmlichen Laufwerksplatte entlang Linie VII-VII in Fig. 8 zeigt, und
Fig. 8 eine teilweise Draufsicht auf eine herkömmliche Laufwerksplatte zeigt.

Zunächst sei auf Fig. 7 und 8 Bezug genommen, die in einer Schnittansicht und einer Draufsicht eine herkömmliche Laufwerksplatte für eine Gleiskette eines Kettenfahrzeugs zeigen. Die bekannte Laufwerksplatte 1 wird mit vier Befestigungsbolzen an einer Gleiskette befestigt, wobei die Bolzen durch vier die Laufwerksplatte durchsetzende Befestigungsbohrungen 2, 4 greifen. Jede Befestigungsbohrung weist einen Abschnitt mit kleinerem Durchmesser auf, der zur Aufnahme eines Bolzenschafts dient, und einen Abschnitt mit größerem Durchmesser, der zur Aufnahme eines Bolzenkopfs dient. Da die Breite der Gleiskette nur wenig größer als der Mittelpunktsabstand, d.h. der quer zur Längsrichtung oder Längsmittelebene 40 der Laufwerksplatte gemessene Abstand der am weitesten voneinander entfernten Befestigungsbohrungen 2 ist, wird deutlich, daß die bekannte Laufwerksplatte gerade dort durch die Befestigungsbohrungen erheblich geschwächt ist, wo aufgrund der im Betrieb auftretenden Belastungen die größten Biegemomente und somit auch die größten Biegespannungen auftreten.

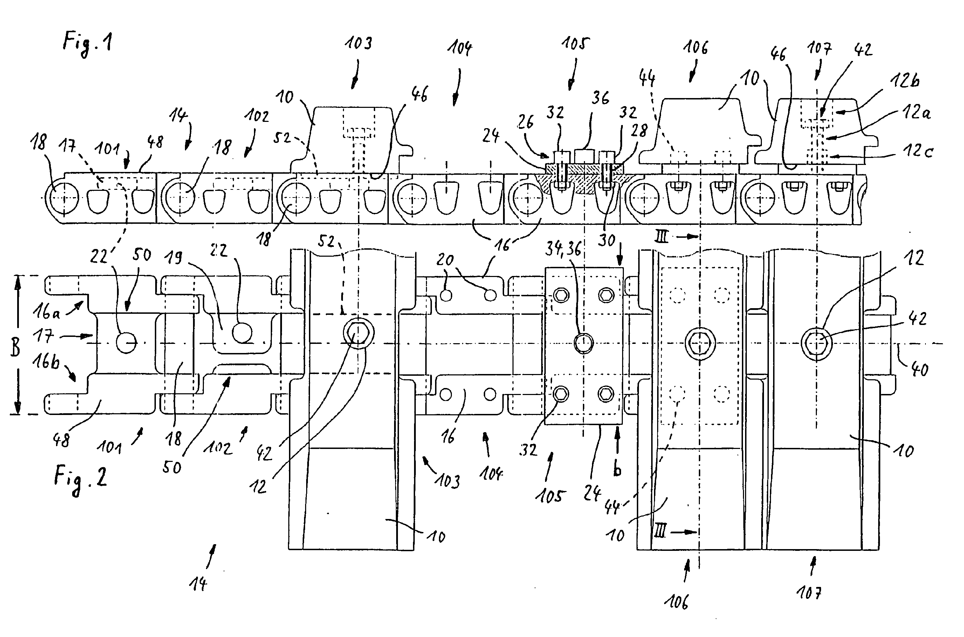

In herkömmlicher Weise wird eine Laufwerksplatte 1, wie sie in Fig. 7 und 8 dargestellt ist, mit vier Befestigungsbolzen an einem Kettenglied befestigt, das ähnlich ausgebildet ist wie das in Fig. 1 und 2 mit 104 bezeichnete Kettenglied, wobei die Befestigungsbolzen in vier Befestigungsbohrungen entsprechend den Befestigungsbohrungen 20 des Kettenglieds 104 eingreifen.

Erfindungsgemäß ist abweichend hierzu vorgesehen, daß das Kettenglied der Gleiskette ein zentrales Befestigungsmittel zur lösbaren Befestigung einer Laufwerksplatte aufweist, im Unterschied zu den bekannten Befestigungsmitteln (entsprechend den Befestigungsbohrungen 20) im seitlichen Bereich der Kettenlaschen 16.

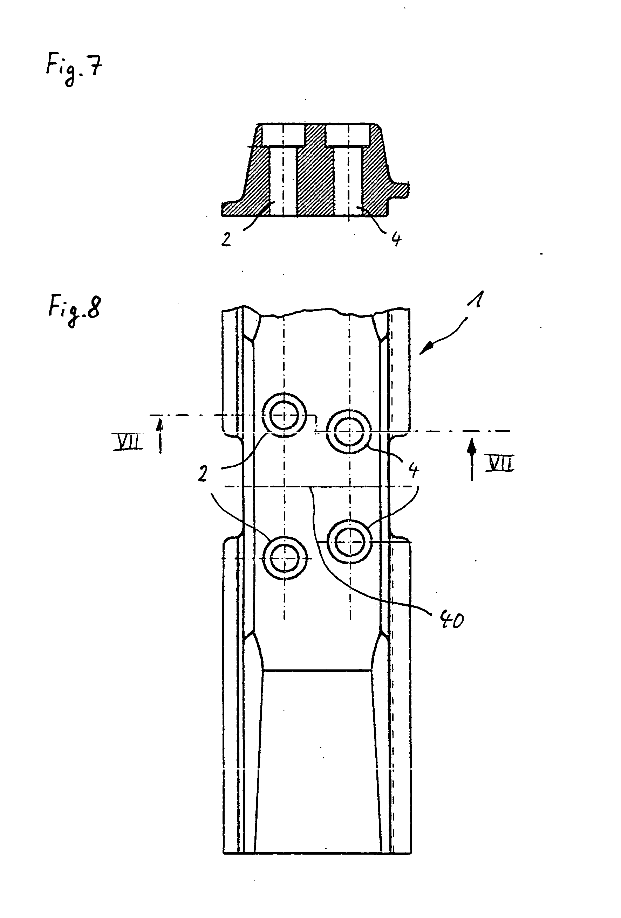

Fig. 4 bis 6 zeigen eine erfindungsgemäße Laufwerksplatte 10 in perspektivischer Ansicht, Seitenansicht und Draufsicht. Wie man erkennt, weist die Laufwerksplatte 10 nur noch eine einzige, mittige Befestigungsöffnung 12 zur Befestigung an einer Gleiskette auf.

Fig. 1 und 2 erläutern die Befestigung der erfindungsgemäßen Laufwerksplatte 10 an einer Gleiskette, wobei dort insbesondere eine erfindungsgemäße Gleiskette und mehrere unterschiedliche Kettenglieder dargestellt sind.

In an sich bekannter Weise besteht die Gleiskette 14 aus Kettengliedern 101 - 107, die (mit Ausnahme des Kettenglieds 101) aus linken und rechten Kettenlaschen 16 und diese in Längs- und Querrichtung untereinander verbindenden Kettenbolzen 18 bestehen. Das Kettenglied 101 ist einstückig mit linken und rechten Kettenlaschenbereichen 16a, 16b und einem dazwischen angeordneten Verbindungsbereich 17 ausgebildet.

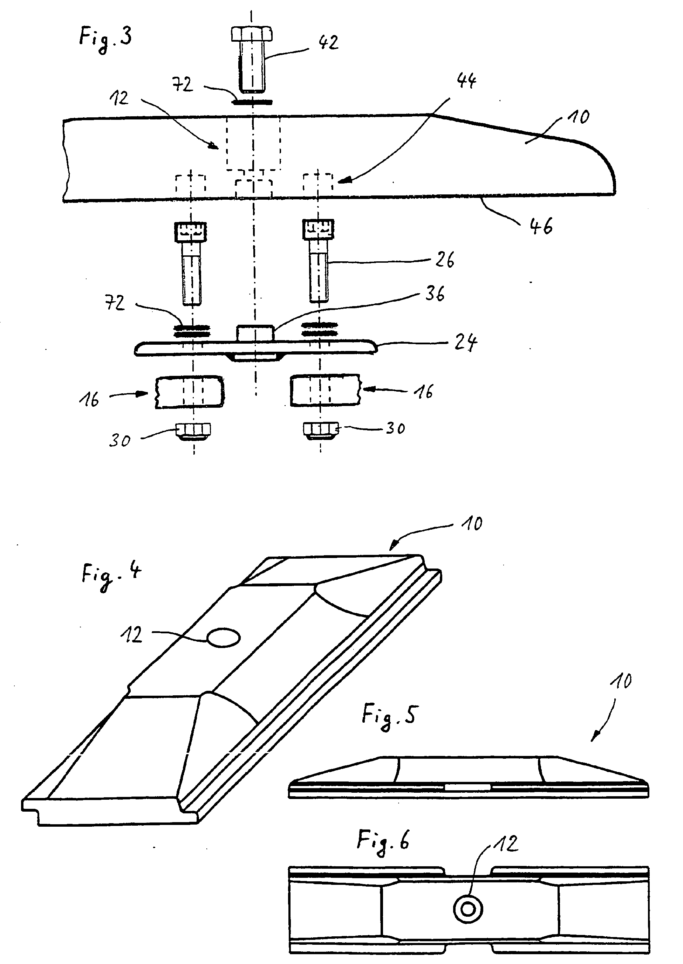

Das Kettenglied 101 nach Fig. 1 und 2 zeigt eine erste Ausführungsform der Erfindung, bei der das zentrale Befestigungsmittel durch einen sich quer zu einer Längsmittelebene 40 erstreckenden Verbindungsbereich 17 des Kettenglieds 101 gebildet ist. Eine mittige Befestigungsöffnung 22 ermöglicht eine Verschraubung mit einer Laufwerksplatte 10 nach Fig. 3 und 4, wie sie auch in Fig. 1 und 2 rechts dargestellt ist. Die Befestigungsöffnung 22 kann mit Innengewinde versehen sein, um die Befestigung mittels eines Befestigungsbolzens 42 (wie bei den Kettengliedern 106 und 107 dargestellt) zu ermöglichen.

Fig. 1 und 2 zeigen anhand weiterer Kettenglieder bzw. Kettenlaschenpaare 102, 103 eine Variante der vorstehend beschriebenen Befestigungslösung, wobei hier kein durchgehender Verbindungsbereich, sondern ein einseitig von einer der Kettenlaschen 16 ausgehender Befestigungsansatz 19 vorgesehen ist, der sich bis in die Nähe der gegenüberliegenden Kettenlasche erstreckt und in dem eine leicht außermittige Befestigungsöffnung 22 vorgesehen ist. Anders als dargestellt könnte vorgesehen sein, daß sich der Befestigungsansatz 19 noch weiter in Richtung auf die gegenüberliegende Kettenlasche erstreckt, wobei dann die Befestigungsöffnung 22 auf der Längsmittelebene 40 angeordnet sein könnte. Umgekehrt könnte im Falle des Kettenglieds 101 vorgesehen sein, daß sich die Befestigungsöffnung 22 nicht auf der Längsmittelebene 40 befindet, sondern seitlich versetzt dazu. Auch die Anordnung mehrerer auf der Längsmittelebene 40 befindlicher oder seitlich geringfügig davon versetzter Befestigungsöffnungen ist möglich.

Wie sich auf Fig. 2 und insbesondere aus der Seitenansicht nach Fig. 1 ergibt, in der das zentrale Befestigungsmittel (Verbindungsbereich 17 bzw. Befestigungsansatz 19) gestrichelt angedeutet ist, ist das zentrale Befestigungsmittel bezüglich einer im Betrieb außenseitig liegenden Anlagefläche 48 des Kettenglieds nach innen, in Richtung der Längsmittelebene 40, abgestuft versetzt, wobei in Längsrichtung verlaufende seitliche Abstufungen oder Übergangsschultern 50 gebildet werden, die eine Zentrierungsanlage für eine komplementär dazu ausgebildete Zentrierungsausformung 52 bilden, die an einer im montieren Zustand der Anlagefläche 48 zugekehrten Oberseite 46 der Laufwerksplatte 10 ausgebildet ist.

Die Kettenglieder 104 - 107 dienen der Erläuterung einer weiteren Ausführungsform der Erfindung.

Auf zwei gegenüberliegenden, mit Befestigungsbohrungen 20 versehenen Kettenlaschen 16 eines Kettenglieds 104, 105 ist zunächst eine Adapterplatte 24 befestigt.

Vier Befestigungsbolzen 26 greifen durch Befestigungsbohrungen 28 der Adapterplatte 24 und durch die Befestigungsbohrungen 20 der Kettenlaschen 16 in Befestigungsmuttern 30 auf der Innenseite der Kettenlaschen. Bolzenköpfe 32 der Befestigungsbolzen 26 stehen oberhalb der Adapterplatte 24 vor.

Die Adapterplatte 24 weist eine mittige Befestigungsöffnung 34 auf, die zur Verstärkung in Form einer mit Innengewinde versehenen Hülse 36 (Fig. 3) ausgebildet ist.

Die Breite b der Adapterplatte 24, d.h. ihre Erstreckung quer zur Längsmittelebene 40 der Gleiskette 14, entspricht im wesentlichen der Breite B der Kettenglieder der Gleiskette, d.h. dem Abstand der Außenseiten der Kettenlaschen 16, und ist zweckmäßigerweise geringfügig größer gewählt, wie Fig. 2 zeigt.

Eine erfindungsgemäße Laufwerksplatte 10 ist mit einem einzigen, mittigen Befestigungsbolzen 42, der in die mit Innengewinde versehene Hülse 36 greift, mit der Adapterplatte 24 verschraubt, wobei zur formschlüssigen Fixierung der Laufwerksplatte vier zylindrische Ausnehmungen 44 in deren der Gleiskette 14 zugewandten Oberseite 46 vorgesehen sind, in die die Bolzenköpfe 32 eintreten, so daß die Laufwerksplatte 10 gegenüber einer Verdrehung um die Längsachse des Befestigungsbolzens 42 gesichert ist.

Der Befestigungsbolzen 42 der Laufwerksplatte 10 greift durch eine mittige Befestigungsöffnung 12, die einen mehrfach abgestuften Durchmesser aufweist, wie Fig. 1 und auch Fig. 3 zeigen, nämlich einen mittleren Abschnitt 12a mit einem Durchmesser, der einem Schaftdurchmesser des Befestigungsbolzens 42 entspricht, einen unteren Abschnitt 12b mit einem Durchmesser, der einem Bolzenkopf des Befestigungsbolzens 42 entspricht, und einen oberen Abschnitt 12c mit einem Durchmesser, der einem Außendurchmesser der Hülse 36 entspricht.

Fig. 3 zeigt in einer auseinandergezogenen Darstellung in Seiten- bzw. Schnittansicht, in etwa entlang der Linie III-III in Fig. 2, eine erfindungsgemäße Laufwerksplattenbefestigung 70, mit der Adapterplatte 24 und der damit zu verschraubenden Laufwerksplatte 10. Wie Fig. 3 weiter zeigt, sind den Befestigungsbolzen 42 und 26 Unterlegscheiben 72 zugeordnet. Die Befestigungsmuttern 30 sind als selbstsichernde Muttern ausgebildet.
Wie man insbesondere Fig. 2 und 3 deutlich entnimmt, ist die erfindungsgemäße Laufwerksplatte 10 ausschließlich in ihrem mittleren Bereich durch eine durchgehende Befestigungsöffnung 12 geschwächt, was allerdings im Hinblick auf die zu erwartenden Belastungen unproblematisch ist, da Biegespannungen erst weiter außen auftreten, nämlich in der Nähe der seitlichen Ränder der Adapterplatte 24. In diesem Bereich sind keine schwächenden Bohrungen vorhanden, so daß die im Betrieb entstehenden Beanspruchungen gut aufgenommen werden können.

Wegen der zur Lagesicherung der Laufwerksplatte 10 dienenden Ausnehmungen 44 für die Bolzenköpfe 32 ist es zweckmäßig, die Adapterplatte 24 in seitlicher Richtung, d.h. quer zur Längsrichtung 40, ein Stück weit über die Breite B der Gleiskette 14 bzw. über den äußeren Rand der Kettenlaschen 16 hinaus zu verbreitern, wie in Fig. 2 und 3 dargestellt ist, damit dort, wo im Betrieb die größten Biegemomente auftreten, d.h. am Rand der Adapterplatte 24, ein gewisser Abstand zu den in einem unvermeidlichen Ausmaß schwächenden Ausnehmungen 44 besteht.
- 1: Laufwerksplatte (Stand der Technik)
- 2, 4: Befestigungsbohrung
- 10: Laufwerksplatte
- 12: Befestigungsöffnung (von 10)
- 12a, 12b, 12c: Abschnitte (von 12)
- 14: Gleiskette
- 16: Kettenlasche
- 16a, 16b: Kettenlaschenbereich
- 17: Verbindungsbereich (von 101)
- 18: Kettenbolzen
- 19: Befestigungsansatz (von 16)
- 20: Befestigungsbohrung
- 22: Befestigungsöffnung (von 17, 19)
- 24: Adapterplatte
- 26: Befestigungsbolzen
- 28: Befestigungsöffnung (von 24)
- 30: Befestigungsmutter
- 32: Bolzenkopf (von 26)
- 34: zentrale Befestigungsöffnung (von 24)
- 36: Hülse
- 40: Längsrichtung, Längsmittelebene
- 42: Befestigungsbolzen
- 44: Ausnehmung (in 10)
- 46: Oberseite (von 10)
- 48: Anlagefläche
- 50: Übergangsschulter
- 52: Zentrierungsausformung
- 70: Laufwerksplattenbefestigung
- 72: Unterlegscheibe
- 101 - 107: Kettenglied
- b: Breite (von 24)
- B: Breite (von 101 - 107)

## Patentansprüche

1. Gleiskette (14) für ein Kettenfahrzeug, bei der mindestens ein Kettenglied (101 bis 107) ein zentrales Befestigungsmittel (24) zur lösbaren Befestigung einer Laufwerksplatte (10) aufweist, das sich innerhalb eines zentralen, benachbart zu einer Längsmittelebene (40) der Gleiskette (14) angeordneten Befestigungsbereichs befindet, **dadurch gekennzeichnet, daß** das zentrale Befestigungsmittel (24) durch eine an Kettenlaschen (16) des Kettenglieds (104) befestigte, das Kettenglied (104) quer zur Längsmittelebene (40) überspannende Adapterplatte (24) gebildet ist.

2. Gleiskette nach Anspruch 1, **dadurch gekennzeichnet, daß** der zentrale Befestigungsbereich eine Breite von bis zu 75 % einer Breite (B) des Kettenglieds (101 bis 107), insbesondere eine Breite von bis zu 50 % der Breite (B) und bevorzugt eine Breite von bis zu 25 % der Breite (B) aufweist.

3. Gleiskette nach Anspruch 1 oder 2, **dadurch gekennzeichnet, daß** das zentrale Befestigungsmittel durch einen oder zwei sich quer zur Längsmittelebene (40) erstreckenden Befestigungsansatz (19) oder Befestigungsansätze einer Kettenlasche (16) des Kettenglieds (102) gebildet ist.

4. Gleiskette nach einem der Ansprüche 1 bis 3, **dadurch gekennzeichnet, daß** das zentrale Befestigungsmittel durch einen sich zwischen zwei Kettenlaschenbereichen (16a, 16b) des Kettenglieds (101) erstreckenden und einstückig damit ausgebildeten Verbindungsbereich (17) gebildet ist.

5. Gleiskette nach einem der Ansprüche 1 bis 4, **dadurch gekennzeichnet, daß** das zentrale Befestigungsmittel (17, 19) mindestens eine innerhalb des zentralen Befestigungsbereichs liegende Befestigungsöffnung (22), insbesondere mit Innengewinde (34), zur Aufnahme mindestens eines Befestigungsbolzens (42) aufweist.

6. Gleiskette nach einem der Ansprüche 3 bis 5, **dadurch gekennzeichnet, daß** das zentrale Befestigungsmittel (17, 19) bezüglich einer im Betrieb außenseitig liegenden Anlagefläche (48) des Kettenglieds (101, 102) entlang der Längsmittelebene (40) nach innen abgestuft versetzt ist, wobei seitliche Übergangsschultern (50) eine Zentrierungsanlage für eine Laufwerksplatte (10) bilden.

7. Gleiskette nach einem der vorhergehenden Ansprüche, **dadurch gekennzeichnet, daß** die Adapterplatte (24) beiderseits der Längsmittelebene (40) jeweils mindestens eine seitliche Befestigungsöffnung (28) zur Befestigung an den Kettenlaschen aufweist.

8. Gleiskette nach einem der vorhergehenden Ansprüche, **dadurch gekennzeichnet, daß** die Adapterplatte (24) mindestens eine innerhalb des zentralen Befestigungsbereichs befindliche zentrale Befestigungsöffnung (34) zur Befestigung der Laufwerksplatte (10) aufweist.

9. Gleiskette nach Anspruch 8, **dadurch gekennzeichnet, daß** die mindestens eine zentrale Befestigungsöffnung (34) der Adapterplatte (24) (jeweils) durch eine mit Innengewinde versehene und mit der Adapterplatte unlösbar verbundene Verstärkungshülse (36) gebildet ist.

10. Gleiskette nach einem der vorhergehenden Ansprüche, **dadurch gekennzeichnet, daß** die Adapterplatte (24) eine Breite (b) aufweist, die im wesentlichen der Breite (B) des Kettenglieds (104, 105) entspricht oder die bis zur doppelten Breite (B) des Kettenglieds (104, 105) beträgt.

11. Laufwerksplatte (10) für eine Gleiskette (14) nach einem der vorangehenden Ansprüche, mit einem zentralen Befestigungsmittel (12) zur Befestigung innerhalb des zentralen Befestigungsbereichs der Gleiskette (14), **dadurch gekennzeichnet, daß** in einer im montierten Zustand der Adapterplatte (24) zugewandten Oberseite (46) der Laufwerksplatte (10) seitliche, mit seitlichen Befestigungsöffnungen (28) der Adapterplatte (24) fluchtende Ausnehmungen (44) zum zentrierenden Zusammenwirken mit Bolzenköpfen (32) von Befestigungsbolzen (26) der Adapterplatte (24) angeordnet sind.

12. Laufwerksplatte nach Anspruch 11, **dadurch gekennzeichnet, daß** das zentrale Befestigungsmittel mindestens eine Befestigungsöffnung (12) aufweist, die symmetrisch zu der Längsachse (40) ausgebildet ist/sind.

13. Laufwerksplatte nach einem der Ansprüche 11 oder 12, soweit rückbezogen auf Anspruch 6, **dadurch gekennzeichnet, daß** an einer im montierten Zustand der Gleiskette (14) zugewandten Oberseite (46) der Laufwerksplatte (10) Zentrierungsformen (52) zum zentrierenden Zusammenwirken mit den Übergangsschultern (50) des Kettenglieds (101, 102) angeordnet sind.

## Claims

1. Track (14) for an endless track vehicle, in which at least one track link (101 to 107) has a central fastening means (24) for the releasable fastening of a ground engaging plate (10), which fastening means is located within a central fastening region arranged adjacent to a longitudinal centre plane (40) of the track (14), **characterized in that** the central fastening means (24) is formed by an adapter plate (24) which is fastened to link plates (16) of the track link (104) and spans the track link (104) transversely with respect to the longitudinal centre plane (40).

2. Track according to Claim 1, **characterized in that** the central fastening region has a width of up to 75% of a width (B) of the track link (101 to 107), in particular a width of up to 50% of the width (B) and preferably a width of up to 25% of the width (B).

3. Track according to Claim 1 or 2, **characterized in that** the central fastening means is formed by one fastening extension (19) or two fastening extensions, extending transversely with respect to the longitudinal centre plane (40), of a link plate (16) of the track link (102).

4. Track according to one of Claims 1 to 3, **characterized in that** the central fastening means is formed by a connecting region (17) which extends between two link plate regions (16a, 16b) of the track link (101) and is formed integrally therewith.

5. Track according to one of Claims 1 to 4, **characterized in that** the central fastening means (17, 19) has at least one fastening opening (22) which is located within the central fastening region, in particular with an internal thread (34), for receiving at least one fastening bolt (42).

6. Track according to one of Claims 3 to 5, **characterized in that** the central fastening means (17, 19) is offset inwards in a stepped manner along the longitudinal centre plane (40) with respect to a bearing surface (48) of the track link (101, 102), which bearing surface is located on the outside during operation, with lateral transition shoulders (50) forming a centring system for a ground engaging plate (10).

7. Track according to one of the preceding claims, **characterized in that** the adapter plate (24) has at least one lateral fastening opening (28) in each case on both sides of the longitudinal centre plane (40) for fastening to the link plates.

8. Track according to one of the preceding claims, **characterized in that** the adapter plate (24) has at least one central fastening opening (34), which is located within the central fastening region, for fastening of the ground engaging plate (10).

9. Track according to Claim 8, **characterized in that** the at least one central fastening opening (34) of the adapter plate (24) is formed (in each case) by a reinforcing sleeve (36) which is provided with an internal thread and is connected nonreleasably to the adapter plate.

10. Track according to one of the preceding claims, **characterized in that** the adapter plate (24) has a width (b) which corresponds essentially to the width (B) of the track link (104, 105) or which is up to twice the width (B) of the track link (104, 105).

11. Ground engaging plate (10) for a track (14) according to one of the preceding claims, with a central fastening means (12) for fastening within the central fastening region of the track (14), **characterized in that** lateral recesses (44) which are aligned with lateral fastening openings (28) of the adapter plate (24) and are intended for the centring interaction with bolt heads (32) of fastening bolts (26) of the adapter plate (24) are arranged in an upper side (46) of the ground engaging plate (10), which side faces the adapter plate (24) in the fitted state.

12. Ground engaging plate according to Claim 11, **characterized in that** the central fastening means has at least one fastening opening (12) which is/are formed symmetrically with respect to the longitudinal axis (40).

13. Ground engaging plate according to either of Claims 11 and 12, if they refer back to Claim 6, **characterized in that** centring shapes (52) for the centring interaction with the transition shoulders (50) of the track link (101, 102) are arranged on an upper side (46) of the ground engaging plate (10), which side faces the track (14) in the fitted state,

## Revendications

1. Chenille (14) pour un véhicule chenillé, pour laquelle au moins un maillon de chenille (101 à 107) présente un moyen de fixation central (24) pour la fixation désolidarisable d'une semelle (10) qui se trouve dans une zone de fixation centrale, disposée au voisinage d'un plan médian longitudinal (40) de la chenille (14), **caractérisée en ce que** le moyen de fixation central (24) est formé par une plaque adaptatrice (24), fixée sur les pattes de chenille (16) du maillon de chenille (104) et couvrant le maillon de chenille (104) transversalement par rapport au plan médian longitudinal (40).

2. Chenille selon la revendication 1, **caractérisée en ce que** la zone de fixation centrale présente une largeur allant jusqu'à 75 % d'une largeur (B) du maillon de chenille (101 à 107), en particulier une largeur allant jusqu'à 50 % de la largeur B et, de préférence, une largeur allant jusqu'à 25 % de la largeur B.

3. Chenille selon la revendication 1 ou 2, **caractérisée en ce que** le moyen de fixation central est formé par un ou deux appendice de fixation (19) ou appendices de fixation, s'étendant transversalement au plan médian longitudinal (40), d'une patte de chenille (16) du maillon de chenille (102).

4. Chenille selon l'une des revendications 1 à 3, **caractérisée en ce que** le moyen de fixation central est formé par une zone de liaison, s'étendant entre deux zones de pattes de chenille (16a, 16b) du maillon de chenille (101) et réalisée d'une seule pièce avec elles.

5. Chenille selon l'une des revendications 1 à 4, **caractérisée en ce que** le moyen de fixation central 19 présente au moins une ouverture de fixation (22) située à l'intérieur de la zone de fixation centrale, en particulier avec un taraudage (34), pour recevoir au moins un boulon de fixation (42).

6. Chenille selon l'une des revendications 3 à5, **caractérisée en ce que** le moyen de fixation central (17, 19) est décalé, de façon échelonnée vers l'intérieur le long du plan médian longitudinal (40), par rapport à une face d'appui (48), située extérieurement en fonctionnement, du maillon de chenille (101, 102), sachant que des épaulements de transition latéraux (50) forment un appui de centrage à une semelle (10).

7. Chenille selon l'une des revendications précédentes, **caractérisée en ce que** la plaque adaptatrice (24) présente, de part et d'autre du plan médian longitudinal (40), chaque fois au moins une ouverture de fixation (28) latérale pour la fixation aux pattes de chenille.

8. Chenille selon l'une des revendications précédentes, **caractérisée en ce que** la plaque adaptatrice (24) présente au moins une ouverture de fixation (34) centrale se trouvant à l'intérieur de la zone de fixation centrale, pour la fixation de la semelle (10).

9. Chenille selon la revendication 8, **caractérisée en ce que** la au moins une ouverture de fixation (34) centrale de la plaque adaptatrice (24) est formée (respectivement) par une douille de renforcement (36), munie d'un taraudage (36) et reliée, de façon indésolidarisable, à la plaque adaptatrice.

10. Chenille selon l'une des revendications précédentes, **caractérisée en ce que** la plaque adaptatrice (24) présente une largeur (b), correspondant essentiellement à la largeur (B) du maillon de chenille (104, 105), ou bien faisant jusqu'à deux fois la largeur (B) du maillon de chenille (104, 105).

11. Semelle (10) pour une chenille (14) selon l'une des revendications précédentes, avec un moyen de fixation central (12) pour la fixation à l'intérieur de la zone de fixation centrale de la chenille (14), **caractérisée en ce que**, dans une face supérieure (46), tournée vers la plaque adaptatrice (24) à l'état monté, de la semelle (10), sont disposés des évidements latéraux (44), en alignement avec les ouvertures de fixation latérales (28) de la plaque adaptatrice (24), pour une coopération (130) avec des têtes de boulons (32) appartenant à des boulons de fixation (26) de la plaque adaptatrice (24).

12. Semelle selon la revendication 11, **caractérisée en ce que** le moyen de fixation central présente au moins une ouverture (12), réalisée(s) symétriquement par rapport à l'axe longitudinal (40).

13. Semelle selon l'une des revendications 11 ou 12, ainsi que se référant à la revendication 6, **caractérisée en ce que**, sur une face supérieure (46), tournée vers la chenille (14) à l'état monté, de la semelle (10) sont disposées des formes de centrage (52), pour coopérer, de façon centrante, avec les épaulements de transition (50) du maillon de chenille (101, 102).
